# EUROPEAN PATENT APPLICATION

(11) **EP 1 592 114 A1**
(43) Date of publication of application: **02.11.2005**
(21) Application number: 03815736.8
(22) Date of filing: 22.05.2003
(51) Int. Cl.: H02K 21/22, H02K 1/14

(54) **CLAW-POLE TYPE GENERATOR**

(30) Priority: 03.02.2003 JP 2003025990
(71) Applicant: Ichinomiya Denki Co. Ltd., Sisou-gun, Hyogo 671-4137 (JP)
(72) Inventor: AKITA, Uichi, Yazu-gun, Tottori 680-0701 (JP)
(74) Representative: Hauck, Graalfs, Wehnert, Döring, Siemons
(86) International application number: PCT/JP2003/006435
(87) International publication number: WO 2004/070922

(57) **Abstract**

The claw-pole dynamo (100) of the present invention comprises a permanent magnet (101), two stator yokes (102L and 102R), a core yoke (103), and a coil (104). The core yoke (103) has a pair of semi-cylindrical shaped first split pieces (30) composed by laminating a plurality of thin plate materials (30a-30m), and a pair of rectangular columnar shaped second split pieces (31) composed by laminating a plurality of thin plate materials (31a-31m). Each thin plate material of the first split piece (30) and each thin plate material of the second split piece (31) are arranged orthogonal to each other. The first split pieces (30) are arranged so as to oppose each other around the axis and the second split pieces (31) are arranged so as to oppose each other around the axis. The first split pieces (30) and the second split pieces (31) are combined in a nearly cylindrical form such that the second split pieces (31) are inserted in a sandwiched manner by the first split pieces (30).

## Description

### Technical Field

The present invention relates to a claw-pole dynamo and, more particularly, a claw-pole dynamo used for a bicycle.

### Background Art

A conventional claw-pole dynamo is composed of a cylinder having a permanent magnet, two claw-pole stator yokes which respectively have pole pieces which are alternately aligned in parallel in the circumferential direction, a core yoke connecting the stator yokes magnetically, and a coil arranged around the core yoke. The claw-pole dynamo comprises the permanent magnet as an outer rotor, the stator yokes, the core yoke and the coil as an inner stator. The rotation of the permanent magnet causes the generation of alternating flux in the core yoke, and thereby a current flows through the coil to generate electricity.

Since the eddy current is generated in conjunction with the generation of the alternating flux in the stator yoke and in the core yoke, and the eddy current reduces power generating efficiency, there is a need for suppressing the generation of the eddy current in the claw-pole dynamo. In general, in an iron core as a stator of a dynamo, thin plate materials such as magnetic steel sheets are aligned in the direction that the magnetic fluxes flow and are laminated, whereby the eddy current is suppressed. However, a claw-pole dynamo used as a hub dynamo for a bicycle has a cylindrical core yoke capable of being inserted by a hub shaft. When the magnetic fluxes are generated in parallel with the hub shaft, the cylindrical core yoke cannot be composed by only laminating the thin plate materials having constant shapes. Therefore, a construction has been conventionally devised, wherein the cylindrical core yoke is divided in the circumferential direction or the radial direction by the shape and arrangement of the thin plate materials, and the generation of the eddy current is suppressed.

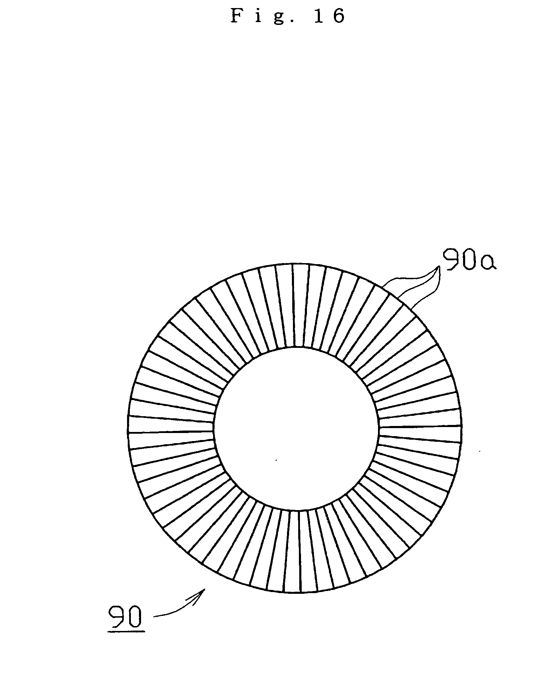

As shown in Fig. 16, for instance, a claw-pole dynamo has been devised, which is formed by a plurality of magnetic steel sheets 90a obtained by radially dividing an annular ring-shaped iron core 90 around the axis (see Japanese Published Unexamined Patent Application No. 7-236238). The thickness of the magnetic steel sheet 90a is reduced in one direction, and the magnetic steel sheets 90a are combined in an annular shape by laminating in the circumferential direction such that the side where the thickness is thin is arranged inside the iron core 90. Thus, the iron core 90 generating magnetic fluxes is composed by laminating the magnetic steel sheet 90a in the circumferential direction. Thereby the flow passage of the eddy current is cut by the laminated boundary of the magnetic steel sheets 90a, and the generation of the eddy current is suppressed.

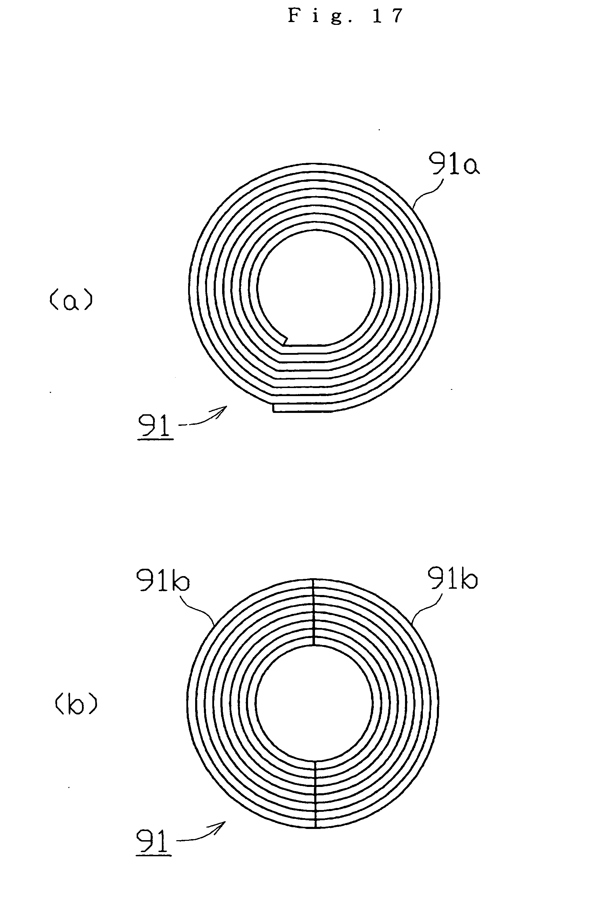

As shown in Fig. 17(a), a claw-pole dynamo has been devised, wherein a core yoke 91 connecting two stator yokes magnetically is formed by laminating a thin band sheet 91a while winding cylindrically (see Japanese Published Unexamined Patent Application No. 6-261511). As shown in Fig. 17(b), a claw-pole dynamo has been devised, which is obtained by laminating and assembling the thin plate materials 91b formed into a semi-cylindrical shape such that the diameter is sequentially larger toward the outside in a radial direction(see Japanese Published Unexamined Patent Application No. 2000-302073). Thus, the core yoke 91 generating the alternating flux is composed by laminating the thin plate materials 91a and 91b in the axial direction. Thereby the flow passage of the eddy current is cut in the laminated boundary of the thin plate materials 91a and 91b and in the seam in the circumferential direction of the thin plate material 91b, and the generation of the eddy current is suppressed.

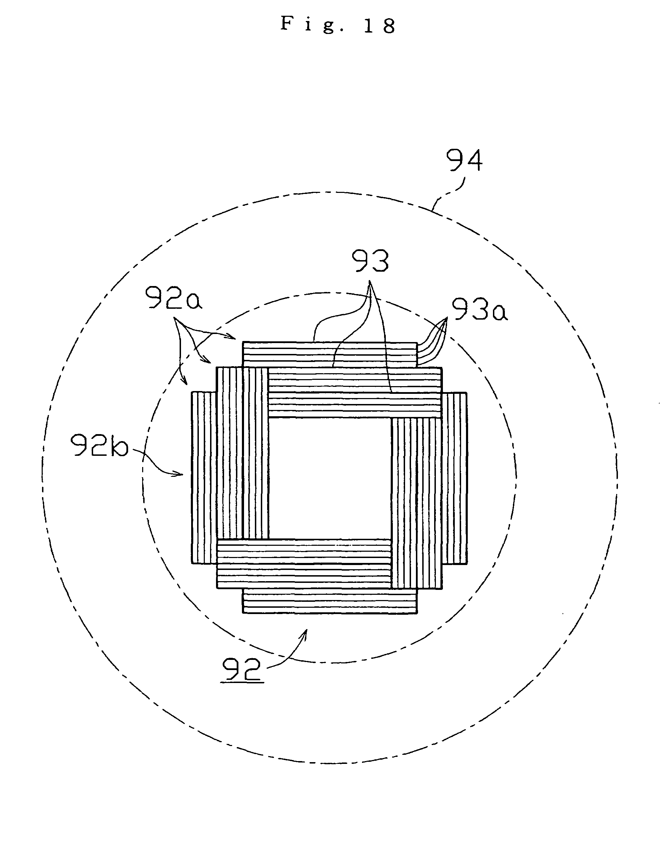

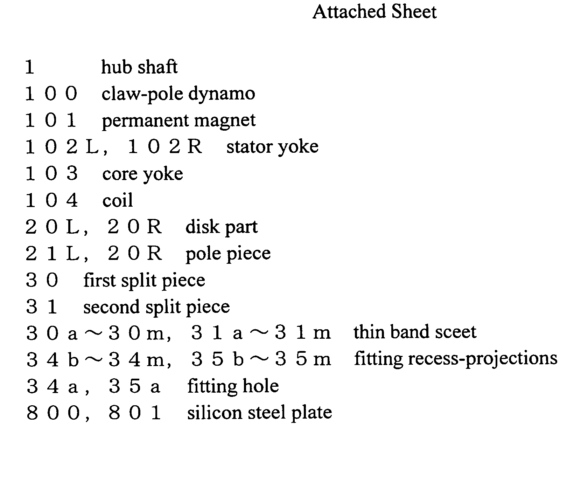

As shown in Fig. 18, a claw-pole dynamo has been devised, wherein a core yokes 92 connecting two stator yokes magnetically is combined in a square cylindrical shape and is arranged while a split piece 93 composed by laminating four thin plate materials 93a having constant shapes is overlapped in the axial direction (see Japanese Published Examined Patent Application No. 2991705). As a result, the flow passage of the eddy current is cut in the laminated boundary of the thin plate material 93a and in the seam between the split pieces 93, and the generation of the eddy current is suppressed.

The generation of eddy current is suppressed by the construction, and the power generation efficiency of the claw-pole dynamo is improved. However, there is a need for further miniaturizing the claw-pole dynamo and reducing the weight of the claw-pole dynamo, and further improving power generating efficiency thereof. Particularly, it is necessary to miniaturize and reduce the weight of a so-called hub dynamo for a bicycle which is fixed to a hub shaft of a wheel of a bicycle and is used as the electrical power of a lamp or the like, and stably generate sufficient electrical power as the lamp or the like at a turning force, equivalent to the number of rotations of the wheel of the bicycle. On the other hand, since it is preferable that the claw-pole dynamo can be easily manufactured as much as possible with respect to the manufacturing cost, it is preferable that the claw-pole dynamo can be easily processed and assembled even if the claw-pole dynamo is miniaturized as a simple construction as much as possible.

However, in the construction shown in Fig. 16, it is difficult to make the thickness change of the magnetic steel sheet 90a constant, and to manufacture an iron core 90 having a desired diameter. Particularly, when the claw-pole dynamo is miniaturized, a problem exists in that high accuracy is demanded in the thickness size or the like such as the magnetic steel sheet 90a, and an advanced technique for processing is required.

As shown in Fig. 17, a comparatively soft band member or the like must be used so as to spirally wind thin plate material 91a, and the flow passage of the eddy current in the circumferential direction cannot be cut. On the other hand, when the thin plate materials 91b curved into a semi-cylindrical shape are laminated in the radial direction, the curved diameters of the thin plate materials 91b must be sequentially larger as the thin plate materials 91b are arranged toward the outside in a radial direction. However, it is difficult to process the thin plate materials 91b into a semi-cylindrical shape by laminating the thin plate materials 91b in the radial direction by mutually sticking without any space. A problem exists in that the cross section area for making magnetic fluxes pass when the space is caused in the direction in which the thin plate materials 91a and 91b are laminated is reduced, and the saturated magnetic flux amount is reduced.

As shown in Fig. 18, when the core yoke 92 is composed by combining split pieces 93 composed by laminating the thin plate materials 93a in a square cylindrical shape, the diameter of the coil 94 wound around the core yoke 92 is larger than that of the corner part 92a of the core yoke 92 having a square cylindrical shape. Therefore, a problem exists in that the miniaturization of the claw-pole dynamo is difficult. It is not a preferable characteristic of the dynamo that the distance to coil 94 is changed in a corner part 92a and a plane part 92b of the core yoke 92. In addition, the diameter of core yoke 92 should be reduced and the outside diameter or the like of the hub shaft should be considered in view of miniaturization of the claw-pole dynamo while it is preferable to enlarge the cross section area of the core yoke 92 to increase the saturated magnetic flux amount. Therefore, it is preferable that thin plate material 93a is efficiently arranged at the center of the coil 94. However, when the core yoke 92 is composed by combining split pieces 93 having constant shapes in a square cylindrical shape as shown in the figure, a problem exists in that many spaces in which the thin plate material 93a is not arranged exist at the center of the coil 94.

### Disclosure of the Invention

The present invention has been accomplished in view of the foregoing. It is an object of the present invention to provide a core yoke which suppresses the generation of the eddy current, can improve the power generating efficiency and can be miniaturized by being arranged efficiently in a coil, and is easily processed and assembled in the claw-pole dynamo and, more particularly, in the claw-pole dynamo used for a bicycle.

The claw-pole dynamo of the present invention comprises: a permanent magnet arranged in circular form; two stator yokes which have disk parts and a plurality of claw-like pole pieces extending in the axial direction at a predetermined interval in the circumferential direction from the peripheral edges of the disk parts, the pole pieces being alternately aligned in parallel in the circumferential direction and being arranged so as to be opposed to the permanent magnet; a core yoke connecting the two stator yokes magnetically; and a coil arranged around the core yoke, wherein the core yoke has a pair of semi-cylindrical shaped first split pieces composed by laminating a plurality of thin plate materials, and a pair of rectangular columnar shaped second split pieces composed by laminating a plurality of thin plate materials, wherein each thin plate material of the first split piece and each thin plate material of the second split piece are arranged orthogonal to each other, the first split pieces are arranged so as to oppose each other around the axis and the second split pieces are arranged so as to oppose each other around the axis, and wherein the first split pieces and the second split pieces are combined in a nearly cylindrical form such that the second split pieces are inserted in a sandwiched manner by the first split pieces. The semi-cylindrical shape of the first split piece is a pillar-shape which has a flat surface for contacting with the rectangular columnar shaped second split piece, and a nearly circumferential surface as the outer surface of the core yoke. The nearly circumferential surface is composed by the end parts of the thin plate materials that are laminated, and is not always limited to a smooth circumferential surface. According to the present invention, the thin plate materials can be efficiently arranged at the center of the coil, and the cross section of the core yoke in the direction orthogonal to the alternating flux can be enlarged. Thereby, the saturated magnetic flux amount of the stator core can be improved. In addition, the power generation efficiency can be improved, and the claw-pole dynamo can be miniaturized.

Since the core yoke is composed by laminating the thin plate materials, the flow passage of the eddy current is cut by the boundary of the thin plate materials. Therefore, the generation of the eddy current in the core yoke can be suppressed, and the power generation efficiency can be improved. The distance of the core yoke and the coil can be maintained nearly constant by forming the core yoke in a nearly cylindrical form, and the characteristics of the claw-pole dynamo can be improved. The diameter of the coil can be by reduced. Thereby the impedance can be decreased and can be miniaturized. Thus, a stable claw-pole dynamo which is light weight and small-sized, and has a large electromotive force can be achieved.

In the claw-pole dynamo of the present invention, a length of the thin plate material of the first split pieces in the direction orthogonal to the axis of the core yoke are sequentially shorter as the thin plate materials are arranged outside the axis. The semi-cylindrical shaped first split piece can be constructed by a simple structure according to the present invention, and the first split piece is easily processed. As a result, the assembly cost of the claw-pole dynamo can be reduced.

In the claw-pole dynamo, the thin plate materials of the first split pieces and the second split pieces are respectively fitted in an integrated state by fitting recess-projections or a fitting hole formed in the thickness direction. The core yoke is easily processed and assembled by integrating the thin plate materials laminated as the first split piece and the second split piece beforehand. As a result, the assembly cost of the claw-pole dynamo can be reduced.

Since the thin plate materials are made from a silicon steel plate material such as an oriented electromagnetic steel sheet and a non-oriented electromagnetic steel sheet, magnetic fluxes easily pass through the thin plate materials, and the thin plate materials have larger electric resistance. Therefore, the eddy current generated in the core yoke can be further suppressed.

The claw-pole dynamo is fixed to a hub shaft of a wheel of a bicycle and is used for the bicycle. Thereby, a hub dynamo which is small and light, and stably generates sufficient electrical power for a lamp or the like at a turning force, equivalent to the number of rotations of the wheel of the bicycle can be achieved.

### Brief Description of the Drawings

Fig. 1 is a front view illustrating an overall construction of a claw-pole dynamo 100 fixed to a hub shaft 1 of a wheel of a bicycle.
Fig. 2 is a side view of a claw-pole dynamo 100.
Fig. 3 is a front view illustrating a construction of a permanent magnet 101.
Fig. 4(a) is a front view illustrating a stator yoke 102L, and Fig. 4(b) is a side view of a stator yoke 102L.
Fig. 5(a) is a front view illustrating constructions of a core yoke 103, a coil 104 and a bobbin 105, and Fig. 5(b) is a side view having partial cross sections thereof.
Fig. 6 is a perspective view illustrating a construction of a bobbin 105.
Fig. 7 is an exploded perspective view of a stator yoke 103.
Fig. 8 is a front view for explaining an assembly of an inner stator.
Fig. 9 is a plan view illustrating a construction of a thin plate material 30a.
Fig. 10 is a plan view illustrating a construction of a thin plate material 30m.
Fig. 11(a) is a partial cross section illustrating fitting recess-projection 34m, and Fig. 11(b) is a partial cross sectional view illustrating a fitting state of a fitting hole 34a and fitting recess-projections 34b-34m.
Fig. 12 is a plan view illustrating a construction of a thin plate material 31a.
Fig. 13 is a process arrangement plan for explaining a method for manufacturing a first split piece 30 and a second split piece 31.
Fig. 14 is a process arrangement plan for explaining another method for manufacturing a first split piece 30 and a second split piece 31.
Fig. 15 is a schematic view illustrating an alternating flux G and an eddy current I generated in a claw-pole dynamo 100.
Fig. 16 is a plan view illustrating an iron core 90 of a conventional claw-pole dynamo.
Fig. 17 is a plan view illustrating a stator core 91 of a conventional claw-pole dynamo.
Fig. 18 is a plan view illustrating a stator core 92 of a conventional claw-pole dynamo.

### Best Mode for Carrying Out the Invention

Hereinafter, the embodiment of the present invention will be described with reference to the drawings.

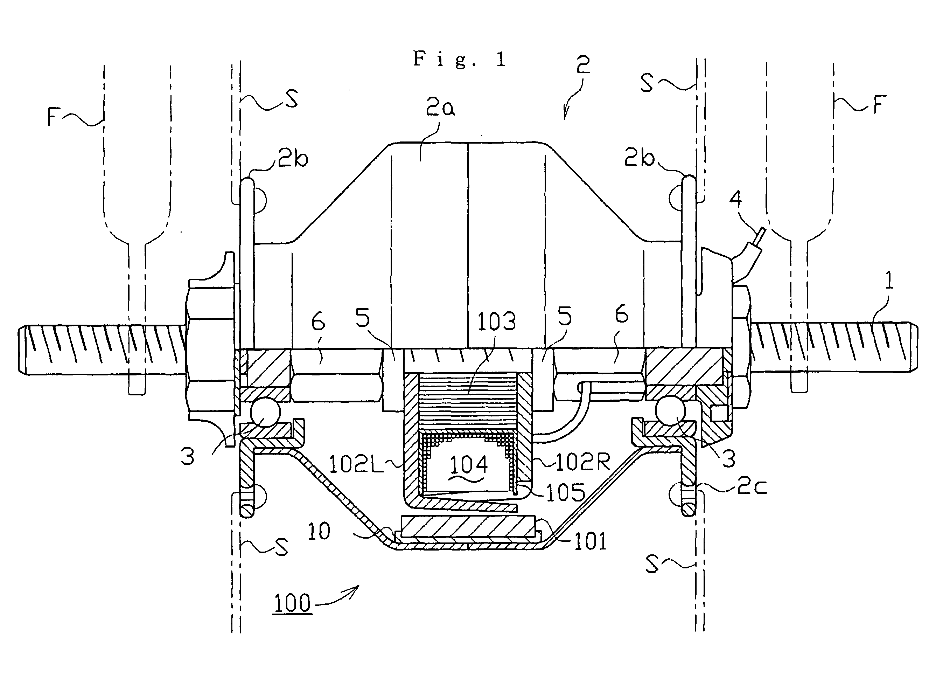

Fig. 1 illustrates an overall construction of a claw-pole dynamo 100 according to the embodiment of the present invention. As shown in Fig. 1, the claw-pole dynamo 100 is provided with a permanent magnet 101 arranged in circular form, two stator yokes 102L and 102R arranged so as to be opposed to the permanent magnet 101, a core yoke 103 connecting the stator yokes 102L and 102R magnetically, and a coil 104 arranged around the core yoke 103. The claw-pole dynamo 100 thus constructed is fixed to a hub shaft 1 of a wheel of any known bicycle and the claw-pole dynamo 100 composes a hub dynamo for a bicycle. Furthermore, a male screw is formed on the hub shaft 1, and the hub shaft 1 is fixed to a fork F for a bicycle wheel by a nut or the like.

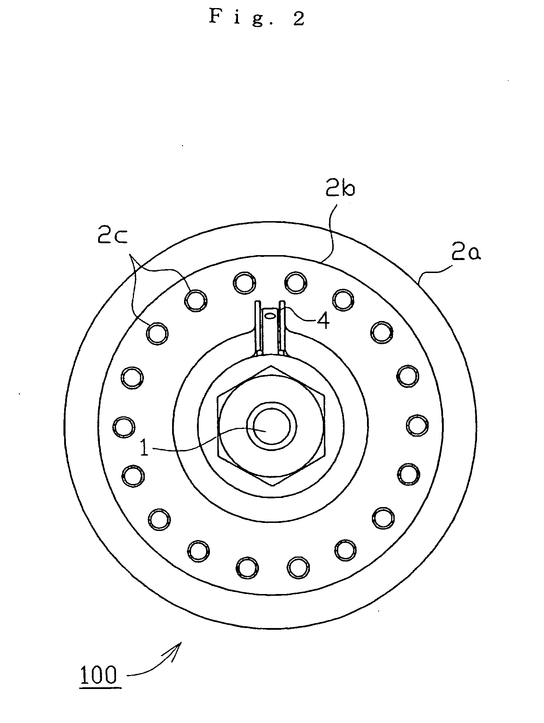

A hub casing 2 is rotatably attached to the hub shaft 1 via a bearing 3. The hub casing 2 is provided with a drum hub 2a and a spoke hub 2b. As shown in Fig. 1 and Fig. 2, the drum hub 2a is a cylindrical body of which the diameter of the vicinity of the center is larger and the diameter is smaller in a tapered shape toward both ends. Disk spoke hubs 2b are respectively provided at both ends of the drum hub 2a. A plurality of holes 2c are arrayed in the circumferential direction at the vicinity of the peripheral edge of the spoke hub 2b. Spokes S are inserted into the holes 2c, and the spoke hub 2b is connected by a rim of a wheel (not shown) by the spoke S. A terminal 4 for taking out the power of the claw-pole dynamo 100 contained in the hub casing 2 is projected outward from the hub casing 2.

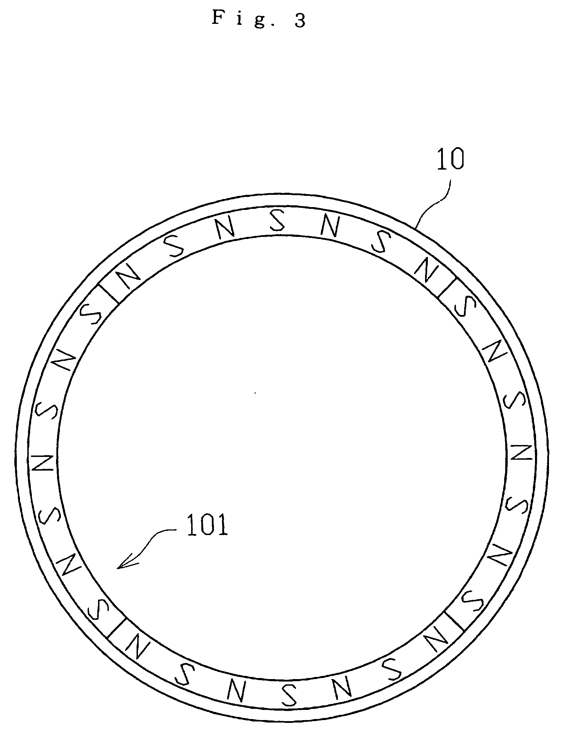

The permanent magnet 101 is fixed to the inner circumferential surface of the large diameter part of the center of the hub casing 2a via a back-up ring 10. As shown in Fig. 3, the back-up ring 10 is an annular ring-shaped frame body, and four magnetic steel sheets composing the permanent magnet 101 are fixed to the inner circumferential surface of the back-up ring 10 continuously and annularly. The permanent magnet 101 arranged in circular form is magnetized with alternating N and S poles disposed in the circumferential direction such that 28 total poles exist. The permanent magnet 101 as described above and the hub casing 2 compose an outer rotor of the claw-pole dynamo 100. The wheel of the bicycle is rotated around the axis of the hub shaft 1. Thereby the hub casing 2 is rotated, and the permanent magnet 101 arranged in circular form on the inner circumferential surface of the hub casing 2 is also rotated.

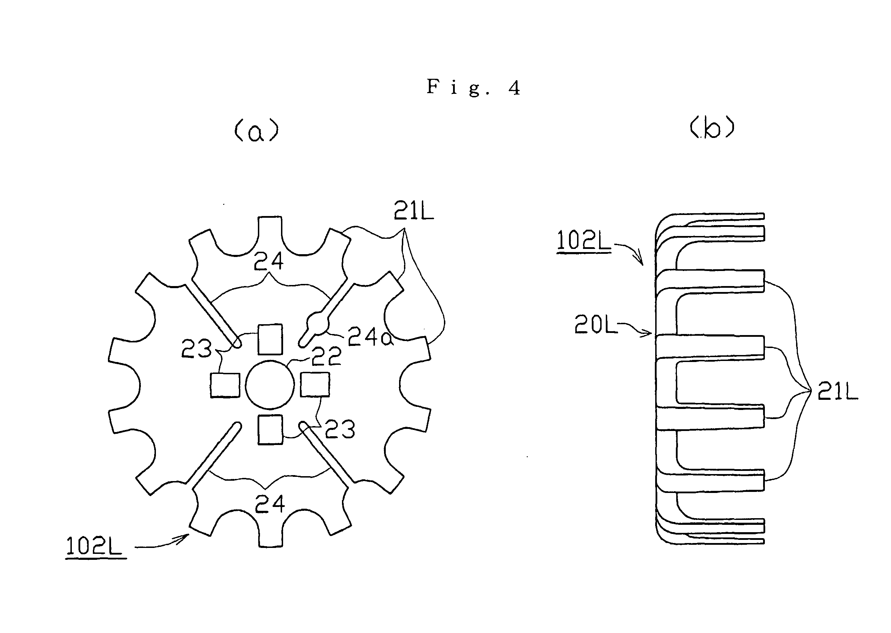

As shown in Fig. 1, the stator yokes 102L and 102R are externally fitted to the hub shaft 1 so as to be positioned inside the permanent magnet 101. The stator yoke 102L has the same shape as that of the stator yoke 102R, and accordingly, hereinafter, the construction of the stator yoke 102L will be explained as an example. As shown in Fig. 4, the stator yoke 102L is provided with a disk part 20L and a plurality of pole pieces 21L extending in the thickness direction of the disk part 20L at fixed intervals in the circumferential direction from the peripheral edge of the disk part 20L.

The disk part 20L has a size to an extent that the disk part 20L is contained inside the permanent magnet 101. As shown in Fig. 1, the external diameter of the disk part 20L is set so as to be alienated to an extent where the magnetic force of the permanent magnet 101 acts on the pole pieces 21L when the stator yokes 102L and 102R are arranged inside the permanent magnet 101. An insertion hole 22 for inserting the hub shaft 1 is perforated at the center of the disk part 20L, and core fitting holes 23 for fitting the core yoke 103 are perforated at four points around the insertion hole 22. The shape of the core fitting hole 23 is optional, and is not limited to being substantially rectangular as shown in the figure. The shape of the core fitting hole 23 may be substantially circular or substantially slit-shaped. At the very least the core fitting holes 23 can be fitted to the core yoke 103. It is not necessary to perforate in the core fitting holes 23, and recessed grooves may be formed on the core fitting holes 23.

In addition, slits 24 are formed in the radial direction from four points of the outer peripheral edge of the disk part 20. The slits 24 suppress an eddy current which flows in the circumferential direction of the disk part 20L in accordance with an alternating flux. In detail, when the alternating flux is generated in the axial direction of the core yoke 103 fitted to the core fitting hole 23, the eddy current is generated around the alternating flux, that is, in the circumferential direction of the disk part 20L. The formation of the slit 24 on the flow passage of the eddy current makes the eddy current hard to flow in the circumferential direction of the disk part 20L, and thereby the generation of the eddy current is suppressed. Additionally, a widened part 24a is formed in the slit 24, and one end of the coil 104 is drawn out from the slit 24.

The pole pieces 21L of 14 poles are formed on the outer peripheral edge of the disk part 20L. The pole pieces 21L extend almost at a right angle in the thickness direction of the disk part 20L, and the longitudinal direction thereof is in parallel to the axial direction of the hub shaft 1 inserted into the insertion hole 22 of the disk part 20L. The number of pole pieces 21L which should be formed in the stator yoke 102L can be arbitrarily set.

The stator yokes 102L and 102R thus constructed are combined such that the pole pieces 21L and 21R are alternately aligned in parallel in the circumferential direction. When the stator yokes 102L and 102R are arranged inside the permanent magnet 101, the pole pieces 21L and 21R of 14 poles are respectively opposed to the magnetic poles of 28 poles of the permanent magnet 101.

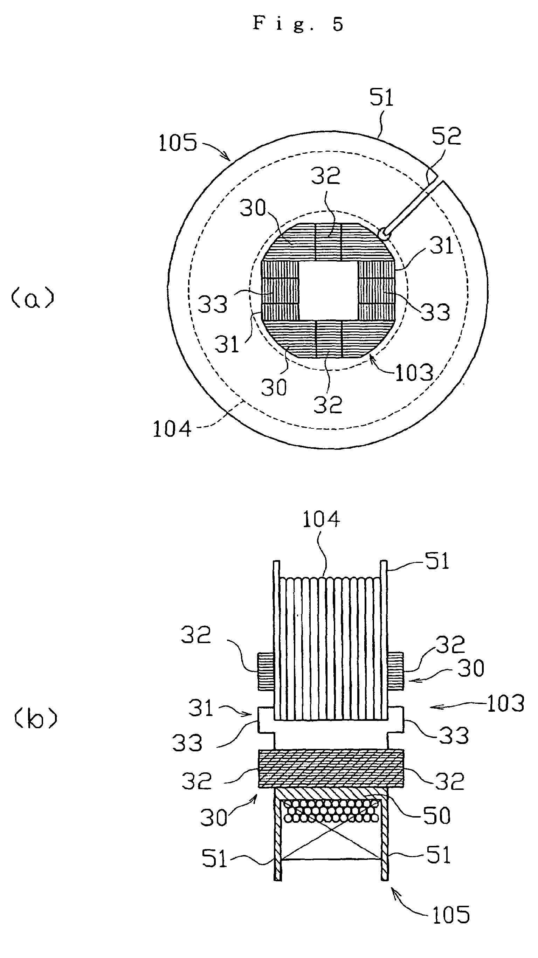

Fig. 5 illustrates a core yoke 103, a coil 104 and a bobbin 105. As shown in Fig. 5, the core yoke 103 is composed by combining a pair of first split pieces 30 and a pair of second split pieces 31, and the first split piece 30 and the second split piece 31 are composed by laminating a plurality of thin plate materials. The laminated structure will be described in detail afterwards. The core yoke 103 thus constructed is contained in the hollow shaft 50 of the bobbin 105 around which the coil 104 is wound. On the other hand, the coil 104 is wound around the outer circumference of the hollow shaft 50 of the bobbin 105. Thereby the coil 104 is arranged around the core yoke 103.

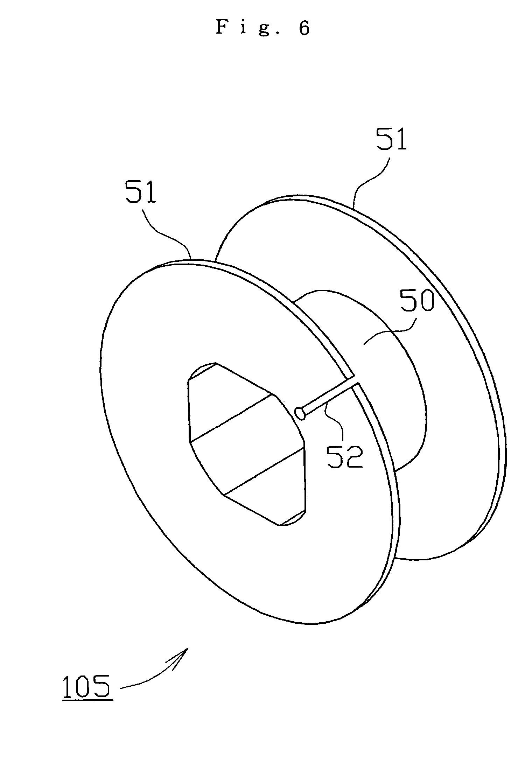

The bobbin 105, which is made of a resin, is wound with the coil 104. As shown in Fig. 6, donut-shaped disks 51 are arranged coaxially on both ends of the hollow shaft 50. As shown in Fig. 3, the coil 104 is wound on the outer circumference of the hollow shaft 50, and the core yoke 103 is arranged in the hollow. Both disks 51 holding the coil 104 prevent disordered winding of the coil 104 wound around the hollow shaft 50. A slit 52 is formed from the outer peripheral edge to the radial direction in the disk 51, and one end of the inner peripheral side of the coil 104 wound around the bobbin 105 can be drawn out from the slit 52.

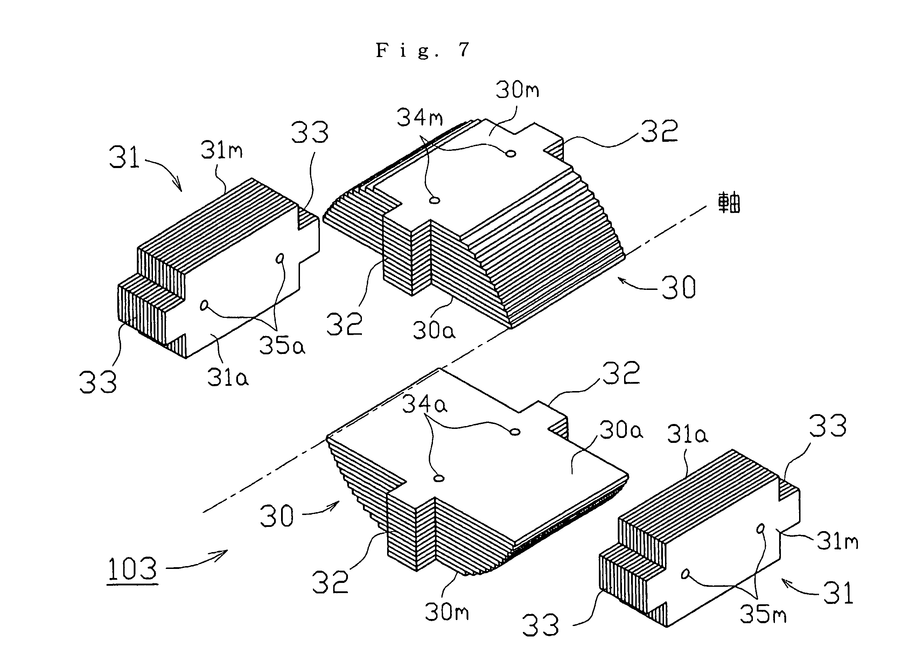

Fig. 7 is an exploded perspective view of the core yoke 103. As shown in Fig. 5 and Fig. 7, the core yoke 103 is composed by combining a pair of first split pieces 30 having semi-cylindrical shape and a pair of second split pieces 31 in a nearly rectangular columnar shape such that the first split pieces 30 are arranged so as to oppose each other around the axis and the second split pieces 31 are arranged so as to oppose each other around the axis, and the second split pieces 31 are inserted in a sandwiched manner by the first split pieces 30 and combined in a nearly cylindrical form. Fitting convex parts 32 and 33 fitted into the core fitting holes 23 of the stator yoke 102L and 102R are respectively formed on both end faces of the first split piece 30 and the second split piece 31. When the first split pieces 30 and the second split piece 31 are arranged in the hollow shaft 50 of the bobbin 105, the fitting convex parts 32 and 33 are projected from the disks 51. The shape of the fitting convex parts 32 and 33 is optional, and it is sufficient that the fitting convex parts 32 and 33 can be fitted to the core fitting hole 23.

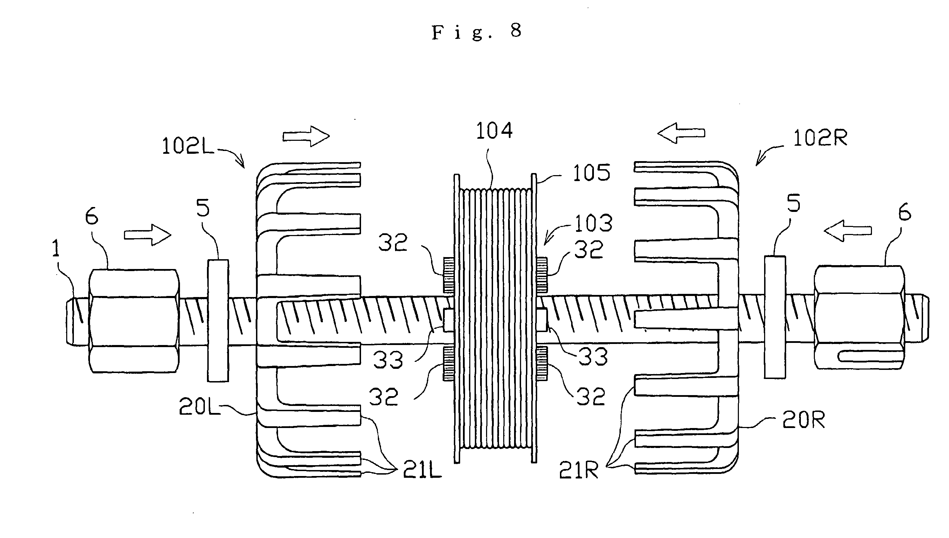

The core yoke 103, the coil 104 and the bobbin 105 thus constructed are assembled. As shown in Fig. 8, the hub shaft 1 is inserted into the core yoke 103, and the stator yokes 102L and 102R are fitted to both ends of the core yoke 103. The stator yoke 102L is magnetically connected with the stator yoke 102R by the core yoke 103. As shown in Fig. 1 and Fig. 8, the core yoke 103, the coil 104, the bobbin 105 and the stator yokes 102L and 102R are held via a washer 5 by a mounting nut 6 to be fixed to the hub shaft 1 such that they are integrated, and the inner stator of the claw-pole dynamo 100 is constructed.

The magnetic connection between the stator yokes 102L and 102R and the core yoke 103 can be obtained by not the fitting recess-projection but by other known constructions which contact the disk parts 20L and 20R of the stator yoke 102L and 102R with the end face of the core yoke 103. However, it is preferable that the contact area between the stator yokes 102L and 102R and the core yoke 103 is increased by the fitting recess-projection of the core fitting hole 23 and the fitting convex parts 32 and 33 to connect the stator yokes 102L and 102R and the core yoke 103 magnetically, and the magnetic resistance between the stator yokes 102L and 102R and the core yoke 103 is reduced.

Hereinafter, the laminated structure of the first split piece 30 and second split piece 31 of the core yoke 103 will be described in detail.

As shown in Fig. 7, the first split piece 30 is a laminated body composed by laminating thirteen thin plate materials 30a-30m having predetermined shapes, and the semi-cylindrical shaped first split pieces 30 are composed by integrating the thin plate materials 30a-30m. That is, a flat surface which faces the inside of the core yoke 103 and contacts the second split piece 31 is formed by the thin plate material 30a, and a nearly circumferential surface as the outer surface of the core yoke 103 is formed stepwise by the end parts of the thin plate materials 30a-30m.

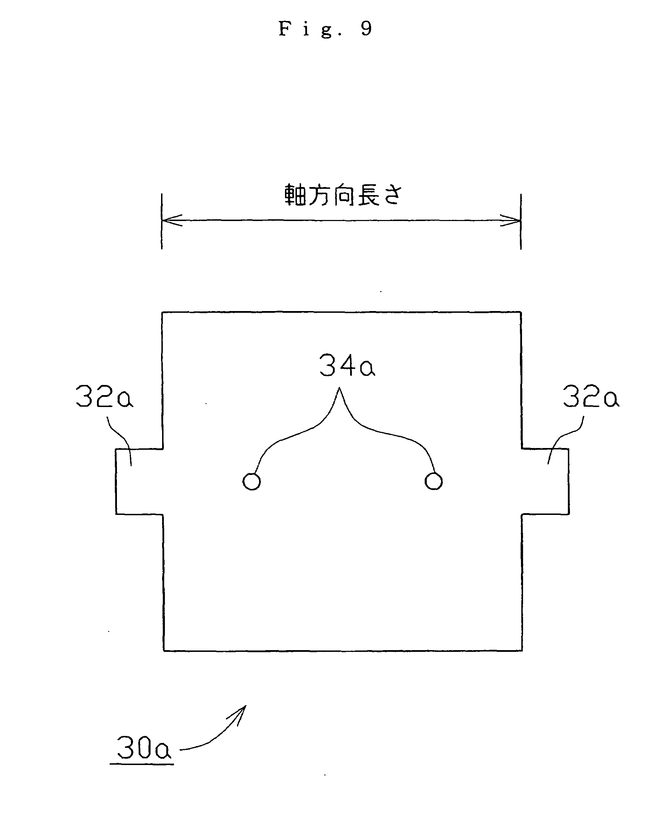

Though Fig. 9 is a plan view of the thin plate material 30a which composes the flat surface of the semi-cylindrical shaped first split piece 30 and has the widest area, the thin plate material 30a has a rectangle, and the length of the side of the thin plate material 30a in one direction is almost the same as that of the hollow shaft 50 of the bobbin 105 in the axial direction. The length of the side of the thin plate material 30a in the other direction is slightly smaller than the inside diameter of the hollow shaft 50, and is set giving a consideration to the outer diameter of the hub shaft 1 inserted into the core yoke 103 as shown in Fig. 5. Convex parts 32a are respectively projected from the approximate centers of the sides in the other direction, and the convex part 32a corresponds to the fitting convex part 32 of the first split piece 30. Fitting holes 34a are formed at two points in the thin plate material 30a. The fitting holes 34a are fitted to the fitting recess-projection of the thin plate material 30b (not shown) to which the thin plate material 30a is adjacent.

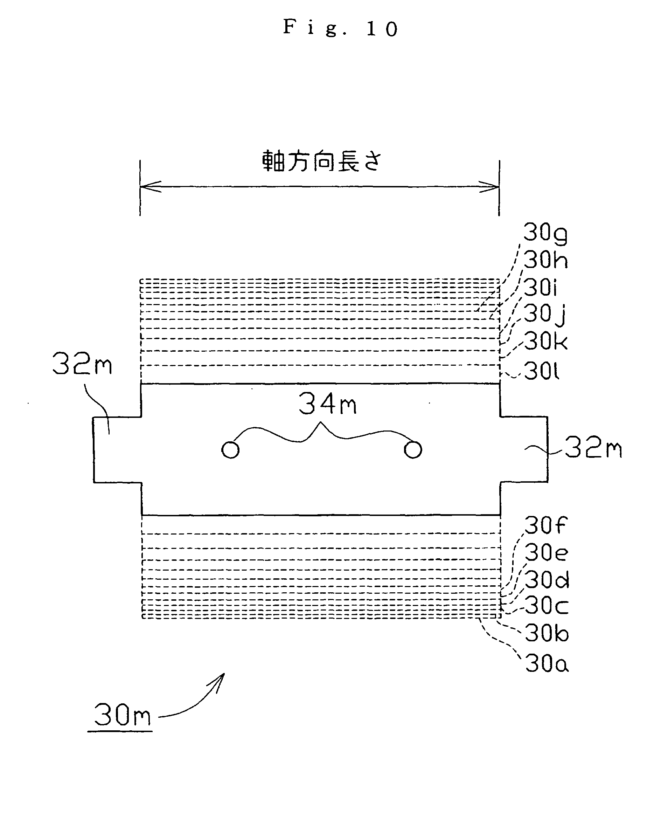

Though Fig. 10 is a plan view of the thin plate material 30m which composes the circumferential surface of the semi-cylindrical shape and has the narrowest area, the thin plate material 30m has a rectangle, and the length of the side of the thin plate material 30m in one direction is almost the same as the length of the hollow shaft 50 of the bobbin 105 in the axial direction in the same way as the thin plate material 30a. The length of the side of the thin plate material 30m in the other direction, that is, the length of the side in the direction orthogonal to the axis is slightly shorter than that of the thin plate material 30a. The lengths of the sides of the rectangles of other thin plate materials 30a-301 have a constant length in the axial direction as shown by a dotted line in the figure, and the length in the direction orthogonal to the axis is sequentially shorter as the thin plate materials are arranged outside the axis when combined as core yoke 103. Thus, the end parts of the thin plate materials 30a-30m laminated are exposed stepwise, and the nearly semi-cylindrical shaped circumferential surface is formed. The ratio for shortening the lengths in the direction orthogonal to the axes of the thin plate materials 30a-30m sequentially is set such that the section shape of the core yoke 103 is approximately circular when the first split piece 30 is made the core yoke 103. Thus, the distance between the outer surface of the core yoke 103 and the coil 104 is maintained nearly constant.

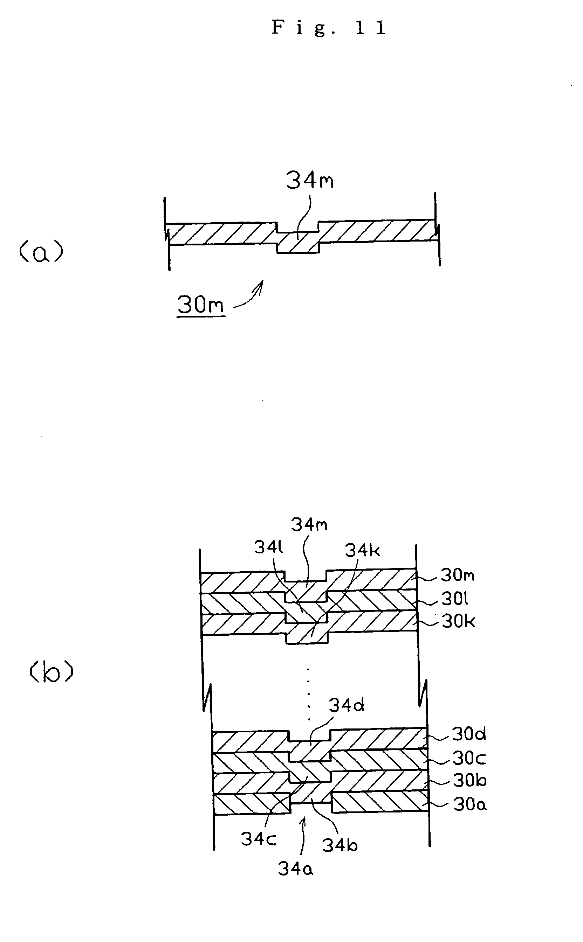

Convex parts 32m are respectively projected from the approximate centers of the sides in the other direction of the thin plate material 30m. The convex part 32m has the same shape as that of the convex part 32a of the thin plate material 30a, and convex parts are similarly formed in the other thin plate materials 30b-301. The fitting convex part 32 is composed by integrating the convex parts. Fitting recess-projections 34m are perforated at the position which corresponds to the fitting hole 34a in the thin plate material 30m. The fitting recess-projections 34m are fitted to the thin plate material 301 which is adjacent in the laminated state. As shown in Fig. 11(a), the recess-projections are integrally formed in the thickness direction of the thin plate material 30m by applying a half-blanking punch on the thin plate material 30m. While not shown in the figure, the same fitting recess-projections are formed on the thin plate materials 30b-301. As shown in Fig. 11(b), when the thin plate materials 30a-30m are sequentially laminated, the convex parts of the fitting recess-projections 34b-34m formed on the thin plate materials 30b-30m other than the thin plate material 30a are fitted to concave parts thereof, and the convex part of the fitting recess-projection 34b is fitted to the fitting hole 34a. Thereby thirteen thin plate materials 30a-30m are integrally fixed. Thus, the thin plate materials 30a-30m can be fitted and integrated by perforating the fitting hole 34a in place of the fitting recess-projection without projecting the convex part of the fitting recess-projection from the outer surface of the first split piece 30. Though the fitting hole 34a is perforated in the thin plate material 30a in the embodiment, the fitting recess-projection may be formed in the thin plate material 30a and the fitting hole may be formed in the thin plate material 30m by reversing the recess-projection direction of the fitting recess-projection.

Thus, when the alternating flux is generated in the axial direction of the core yoke 103 by laminating the thin plate materials 30a-30m to compose the first split piece 30, the flow passage of the eddy current generated around the magnetic flux direction, that is, in the thickness direction of the first split piece 30 can be cut by each boundary between the thin plate materials 30a-30m.

On the other hand, the second split piece 31 is a laminated body composed by laminating thirteen thin plate materials 31a-31m having given shapes, and the rectangular columnar shaped second split piece 31 is composed by integrating the thin plate materials. However, the thin plate materials 31a-31m have the same shape unlike the first split piece 30. Therefore, the thin plate materials 31a-31m will be explained using the thin plate material 31a.

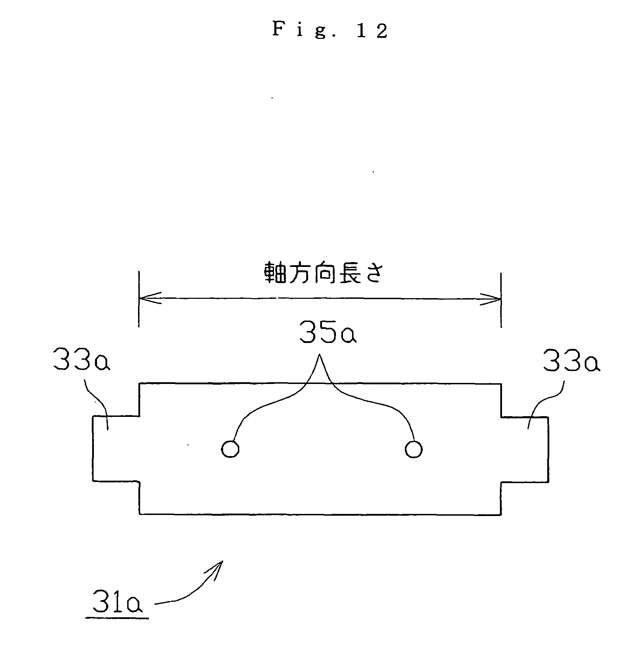

Though Fig. 12 is a plan view of the thin plate material 31a of the rectangular columnar shaped second split piece 31, the thin plate material 31a has a rectangle, and the length of the side of the thin plate material 31a in one direction is almost the same as the length of the hollow shaft 50 of the bobbin 105 in the axial direction. The length of the side of the thin plate material 31a in the other direction is almost the same as or slightly larger than the outer diameter of the hub shaft 1 inserted into the core yoke 103. Convex parts 33a are respectively projected from the approximate centers of the sides in the other direction, and the convex part 33a corresponds to the fitting convex part 33 of the second split piece 31. Fitting holes 35a are formed at two points in the thin plate material 31a. The fitting holes 35a are fitted to the fitting recess-projection of the thin plate material 31b (not shown) to which the thin plate material 31a is adjacent.

While not shown in the figure, the other thin plate materials 31b-31m also have the same rectangle shape as that of the thin plate material 31a. Convex parts 33a-33m respectively projected from the approximate centers of the sides in the other direction are integrated in a laminated manner to compose the fitting convex part 32. Fitting recess-projections 35b-35m are perforated at the position which corresponds to the fitting hole 35a in the thin plate materials 31b-31m. In the same way as the first split piece 30, when the thin plate materials 31a-31m are sequentially laminated, the fitting hole 35a and the fitting recess-projections 35b-35m are respectively fitted. Thereby thirteen thin plate materials 31a-31m are integrally fixed.

Thus, when the alternating flux is generated in the axial direction of the core yoke 103 by laminating the thin plate materials 31a-31m to compose the second split piece 31, the flow passage of the eddy current generated around the magnetic flux direction, that is, in the thickness direction of the second split piece 31 can be cut by each boundary between the thin plate materials 31a-31m. The thin plate materials 30a-30m of the first split piece 30 and the thin plate materials 31a-31m of the second split piece 31 are respectively integrated by the fitting holes 34a and 35a and the fitting recess-projections 34b-34m and 35b-35m. Thereby the first split piece 30 and the second split piece 31 are easily treated, and the efficiency of assembly operation to bobbin 105 is improved.

As shown in Fig. 5, the thin plate materials 30a-30m of the first split piece 30 and the thin plate materials 31a-31m of the second split piece 31 are arranged orthogonal to each other. The first split pieces 30 are arranged so as to oppose each other around the axis, and the second split pieces 31 are arranged so as to oppose each other around the axis. The pair of first split pieces 30 and the pair of second split pieces 31 are combined in a nearly cylindrical form such that the second split pieces 31 are inserted in a sandwiched manner by the first split pieces 30. The first split piece 30 has a semi-cylindrical shape, and the second split piece 31 of which the length in the direction orthogonal to the axis is almost the same as or slightly larger than the outer diameter of the hub shaft 1 is inserted into the first split piece 30 in a sandwiched manner. Thereby a space which makes the hub shaft 1 insert between the pair of first split pieces 30 is caused, and a plurality of thin plate materials can be efficiently arranged in the hollow shaft 50 of the bobbin 105 as the center of the coil 104. As a result, the cross section in the direction orthogonal to the axis of the core yoke 103, that is, the cross section that the alternating flux passes can be enlarged, and the saturated magnetic flux density of the core yoke 103 can be improved. The core yoke 103 can be formed in a nearly cylindrical form, and as shown in Fig. 5, the distance between the core yoke 103 and the coil 104 can be maintained nearly constant. In addition, the diameter of the coil 104 can be reduced, and the internal impedance of the coil 104 can be reduced.

Hereinafter, a method will be described, however, this method is one example, and the method for manufacturing the first split piece 30 and the second split piece 31 of the present invention is not limited to the following method.

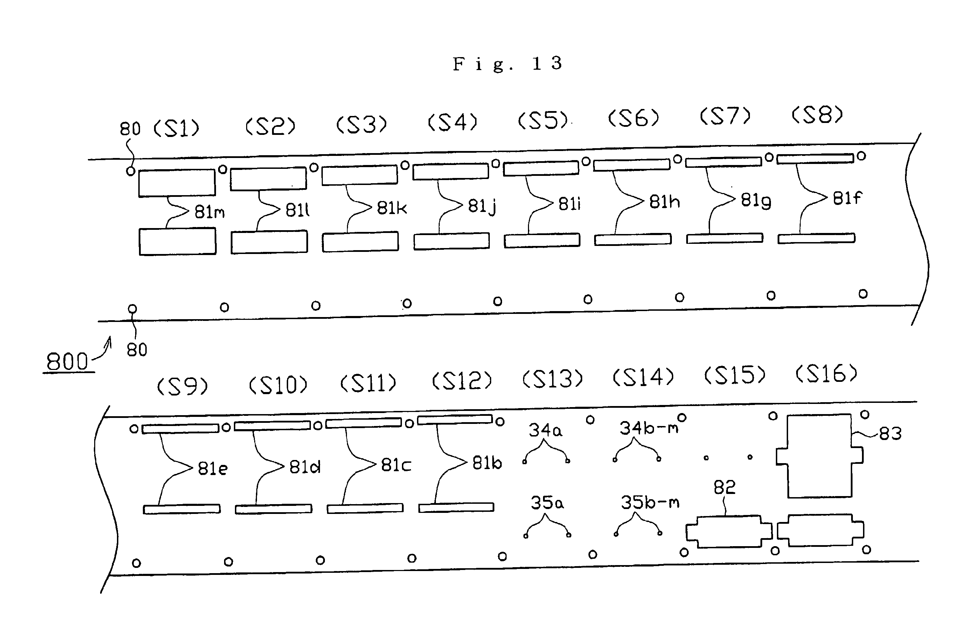

Fig. 13 is a process arrangement plan of a progressive metal die of a high-speed press for manufacturing the first split piece 30 and the second split piece 31. The thin plate materials 30a-30m and 31a-31m are punched off from the silicon steel plate material 800 by a caulking die of a progressive die, and the first split piece 30 and the second split piece 31 are obtained. Since magnetic fluxes easily pass through the thin plate materials 30a-30m and 31a-31m, and the thin plate materials 30a-30m and 31a-31m have larger electric resistance by making the thin plate materials 30a-30m and 31a-31m from the silicon steel plate material 800 having orientation, it is preferable that the eddy current generated in the core yoke 103 can be effectively suppressed. The thin plate materials 30a-30m and 31a-31m are not limited to one made from the oriented silicon steel plate material. Any known and arbitrary magnetic materials generating the alternating flux, for instance, a silicon steel plate material having no orientation, a pure iron material, and a cold strip such as SPCC, SPCD and SPCE can be used. Hereinafter, each process will be sequentially described.

Pilot holes 80 to be a positioning standard are previously perforated in a band silicon steel plate material 800. Then, cut holes 81b-81m which determine the width in the direction orthogonal to the axis of the thin plate materials 30b-30m other than the thin plate material 30a, a fitting hole 34a of the thin plate material 30a, and a fitting hole 35a of the thin plate material 31a are punched off (S1-S13). In detail, the fitting hole 34a of the thin plate material 30a, the fitting hole 35a of the thin plate material 31a (S13), and the cut holes 81m-81b (S12-S1) which determine the width of the thin plate materials 30m-30b are punched off from the upstream side of the progressive direction.

A cut punch for forming the cut holes 81b-81m and the fitting holes 34a and 35a is performed for thirteen thin plate materials laminated as one first split piece 30 and one second split piece 31 at the same time. After the cut punch is performed once, the cut punch is controlled by a counter or the like such that the cut punch is stopped only twelve times. Thus, in the subsequent step the thin plate materials 30a-30m of which the width in the direction orthogonal to the axis are different are continuously punched off from the upstream side of the progressive direction, and can be fitted in a metal die.

Then, a half die cut punch is performed for respectively forming the fitting recess-projections 34b-34m and 35b-35m to the thin plate materials 30b-30m and 31b-31m other than the thin plate material 30a and 31a (S14). In the half die cut punch, a punch is performed so as to be set to about 60% of the plate thickness of the silicon steel plate material 800. Thus, the fitting recess-projections 34b-34m and 35b-35m are formed such that the concave and the convex position are respectively formed on the upper side of the silicon steel plate material 800 and on the lower side thereof. The position of the half die cut punch is the same as that of the cut punch for forming the fitting hole 34a and 35a described above. Since the fitting holes 34a and 35a have already been formed on the thin plate material 30a and 31a, the fitting recess-projection is not formed even if the half die cut punch is performed.

Next, an external shape part 82 of the second split piece 31 is punched off to apply an exhaust pressure (S15). Thus, the thin plate materials 31a-31m are pulled out from the silicon steel plate material 800, and are in pressure contact with the thin plate material already punched off by the exhaust pressure. The fitting holes 35a are fitted to the fitting recess-projections 35b-35m, and the thin plate materials 31a-31m are laminated in the die. Thereby the integrated second split piece 31 is formed. On the other hand, the external shape part 83 of the first split piece 30 is punched off to apply an exhaust pressure with the delay of one step from the punching of the external shape part 82 of the second split piece 31 (S16). Thus, the thin plate materials 30a-30m are pulled out from the silicon steel plate material 800, and are in pressure contact with the thin plate material already punched off by the exhaust pressure. As shown in Fig. 11(b), the fitting holes 34a are fitted to the fitting recess-projections 34b-34m, and the thin plate materials 30a-30m are laminated in the die. Thereby the integrated first split piece 30 is formed. Though the external shape part 83 is an external shape of the thin plate material 30a, the cut holes 81b-80m have been respectively punched off in the thin plate materials 30b-30m other than the thin plate material 30a, and the thin plate materials 30b-30m are formed such that the width in the direction orthogonal to the axis is sequentially shorter. Thus, the first split piece 30 and the second split piece 31 integrated respectively can be manufactured. Since the first split piece 30 and the second split piece 31 can be manufactured from the silicon steel plate 800 by using one metal die at the same time according to the method, there is an advantage that the yield of the material is improved, and the production quantity of the first split piece 30 and the second split piece 31 is easily managed.

The exhaust pressure for press-contacting the thin plate materials 30a-30m and 31a-31m can be applied by a known exhaust pressure ring or the like. While not shown in the figures, the silicon steel plate material 800 from which the external shape part 83 is punched off is scrap cut into appropriate lengths. The external shape part 82 and the external shape part 83 are accurately punched off giving a consideration to the strength or the like of the metal die by displacing the punching of the external shape part 82 of the second split piece 31 to the punching of the external shape part 83 of the first split piece. As a matter of course, either of the external shape part 82 and the external shape part 83 may be first punched off. When the silicon steel plate material 800 has a sufficient width and the metal die has a sufficient strength, the first split piece 30 and the second split piece 31 can be punched off at the same time.

The thin plate materials 30a-30m and 31a-31m of the embodiment are punched off from the silicon steel plate material 800 downward and are sequentially laminated. However, after the thin plate materials 30a-30m and 31a-31m are punched off, the thin plate materials 30a-30m and 31a-31m can be also discharged to the upper side of the silicon steel plate material 800 to be laminated. Though the fitting holes 34a and 35a and the fitting recess-projections 34b-34m and 35b-35m can be formed at a desired position and a desired number, these are preferably arranged while giving a consideration to a position in which the magnetic flux density acting on the thin plate materials 30a-30m and 31a-31m is the lowest, and the strength of the thin plate materials 30a-30m and 31a-31m or the like. It is possible to use in combination other fixing means for laminating the thin plate materials mutually such as a laser welding.

Since the silicon steel plate material 800 having orientation is used in the embodiment, the band direction of the silicon steel plate material 800 is punched off as the axial direction to arrange the axis of the thin plate materials 30a-30m and 31a-31m in the same direction. However, when the non-oriented silicon steel plate material is used, the axes of the thin plate materials 30a-30m and 31a-31m can be arranged in a different direction.

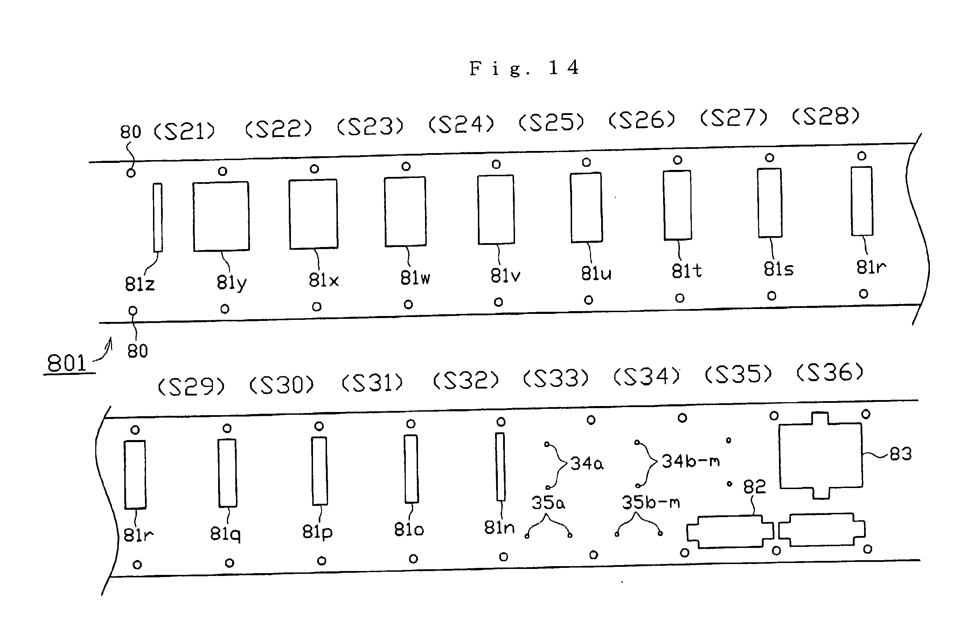

As shown in Fig. 14, for instance, the thin plate materials 30a-30m and the thin plate materials 31a-31m are punched off from the non-oriented silicon steel plate material 801 by setting the axial directions of the thin plate materials 30a-30m to the width direction of the silicon steel plate material 801, and setting the axial directions of the thin plate materials 31a-31m to the band direction of the silicon steel plate material 801. In detail, pilot holes 80 to be a positioning standard are previously perforated in a band silicon steel plate material 801. Then, cut holes 81n-81z which determine the width in the direction orthogonal to the axes of the thin plate materials 30b-30m other than the thin plate material 30a, a fitting hole 34a of the thin plate material 30a, and a fitting hole 35a of the thin plate material 31a are punched off (S21-S33). The cut punch is performed for thirteen thin plate materials laminated as one first split piece 30 and the second split piece 31 at the same time. After the cut punch is performed once, the cut punch is controlled by a counter or the like such that the cut punch is stopped only twelve times. A part of the blade of the cut punch of the thin plate materials 30a-30m adjoined on the silicon steel plate material 801 is common by setting the axial direction of the thin plate materials 30a-30m to the width direction of the silicon steel plate material 801 and cut punching, and a narrow cut punch can be reduced. Thereby there is an advantage that the processing accuracy is improved, resulting in a prolongation of the metal die's life.

Afterwards, a half die cut punch is performed for respectively forming the fitting recess-projections 34b-34m and 35b-35m similarly (S34). The external shape part 82 of the second split piece 31 is punched off (S35). With the delay of one step, the external shape part 83 of the first split piece 30 is punched off (S36).

Hereinafter, the operations of the claw-pole dynamo 100 will be described.

When a bicycle provided with the claw-pole dynamo 100 is made to travel, the wheel of the bicycle is rotated around the axis of the hub shaft 1, and the hub casing 2 is rotated. In addition, the permanent magnet 101 arranged in circular form on the inner circumferential surface is rotated. The 28 poles of the permanent magnet 101 correspond to the pole pieces 21L and 21R of the stator yokes 102L and 102R arranged therein, and the alternating flux is generated in the stator yokes 102L and 102R and the core yoke 103 by the rotation of the permanent magnet 101, and the induction current flows in the coil 104.

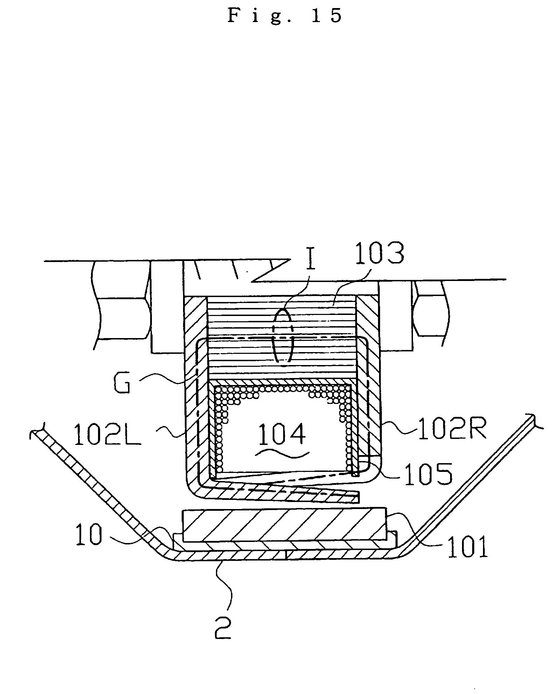

Fig. 15 is a schematic view illustrating the alternating flux. When the alternating flux G is generated from the pole piece 21L of the stator yoke 102L to the disk part 21L, the core yoke 103, the disk part 21R of the stator yoke 102R and the pole piece 21R, the eddy current is generated around the magnetic flux direction of the alternating flux G. Herein, in the core yoke 103, the direction of the magnetic flux G is the axial direction, and the eddy current I is generated around the magnetic flux G. However, the core yoke 103 is composed by combining the first split piece 30 and the second split piece 31 as the laminated body described above. Thereby the flow passage of the eddy current I is cut by each boundary between the thin plate materials 30a-30m and 31a-31m, and the eddy current I becomes difficult to flow. As a result, the eddy current I generated in the stator core 103 is suppressed.

As described above, a pair of first split pieces 31 are combined with a pair of second split pieces, and the stator core 103 is arranged in the hollow shaft 50 of the bobbin 105. Thereby the thin plate materials 30a-30m and 31a-31m can be efficiently set in the axial direction in the hollow shaft 50. As a result, the cross section in the direction orthogonal to the axis of the stator core 103, that is, in the direction orthogonal to the alternating flux G can be enlarged with respect to the space at the center of the coil 104, and the saturated magnetic flux amount of the stator core 103 can be improved.

In addition, the distance between the outer surface of the stator core 103 and the coil 104 are fixed by combining the pair of first split pieces 31 and the pair of second split pieces in a nearly cylindrical form, and the alternating flux G can act equally on the coil 104. The internal impedance of the coil 104 can be reduced by reducing the diameter of the coil 104, and the miniaturization of the inner stator can be achieved.

### Industrial Applicability

The claw-pole dynamo of the present invention suppresses the generation of the eddy current, has high power generating efficiency, and has a large electromotive force. Particularly, the claw-pole dynamo of the present invention is useful as a claw-pole dynamo which is used for a bicycle, and is light in weight and small in size.

## Claims

1. A claw-pole dynamo comprising:
a permanent magnet arranged in circular form; two stator yokes which have disk parts and a plurality of claw-like pole pieces extending in the axial direction at a predetermined interval in the circumferential direction from the peripheral edges of the disk parts, the pole pieces being alternately aligned in parallel in the circumferential direction and being arranged so as to be opposed to the permanent magnet; a core yoke connecting the two stator yokes magnetically; and a coil arranged around the core yoke,
being **characterized in that** the core yoke has a pair of semi-cylindrical shaped first split pieces composed by laminating a plurality of thin plate materials, and a pair of rectangular columnar shaped second split pieces composed by laminating a plurality of thin plate materials,
that each thin plate material of the first split piece and each thin plate material of the second split piece are arranged orthogonal to each other, the first split pieces are arranged so as to oppose each other around the axis and the second split pieces are arranged so as to oppose each other around the axis, and
that the first split pieces and the second split pieces are combined in a nearly cylindrical form such that the second split pieces are inserted in a sandwiched manner by the first split pieces.

2. The claw-pole dynamo according to claim 1, being **characterized in that** a length of the thin plate material of the first split pieces in the direction orthogonal to the axis of the core yoke are sequentially shorter as the thin plate materials are arranged outside the axis.

3. The claw-pole dynamo according to claim 2, being **characterized in that** the thin plate materials of the first split pieces and the second split pieces are respectively fitted in an integrated state by fitting recess-projections or a fitting hole formed in the thickness direction.

4. The claw-pole dynamo according to claim 3, being **characterized in that** the thin plate materials are made of a silicon steel plate material.

5. The claw-pole dynamo according to claims 1 to 4, being **characterized in that** the claw-pole dynamo is fixed to a hub shaft of a wheel of a bicycle and is used for the bicycle.
